## Europäisches Patentamt

## European Patent Office

## Office européen des brevets

(19)

(11) Veröffentlichungsnummer: **0 212 279**
B1

(12) **EUROPÄISCHE PATENTSCHRIFT**

(45) Veröffentlichungstag der Patentschrift:
**03.10.90**

(21) Anmeldenummer: **86109925.7**

(22) Anmeldetag: **19.07.86**

(51) Int. Cl.⁵: **G11B 27/17**, G11B 15/04, G11B 15/20

(54) **Magnetisches Aufzeichnungsgerät.**

(30) Priorität: **10.08.85 DE 3528807**

(43) Veröffentlichungstag der Anmeldung:
**04.03.87 Patentblatt 87/10**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**EP-A- 0 029 946**
**BE-A- 879 620**
**BE-A- 886 249**
**DE-B- 1 046 358**
**US-A- 3 879 755**

**GRUNDIG TECHNISCHE INFORMATIONEN, Band 28, Nr. 3, 1981, Seiten 119-128, Regensburg, DE; F. MEIERHÖFER: "Das Bedienteil und die Uhr des GRUNDIG-Videorecorders Video 2 x 4 super"**
**PATENTS ABSTRACTS OF JAPAN, Band 8, Nr. 141 (P-283)[1578], 30. Juni 1984; & JP-A-59 38 909 (AKAI DENKI K.K.) 03-03-1984**

(73) Patentinhaber: **Deutsche Thomson-Brandt GmbH, Hermann-Schwer-Strasse 3 Postfach 1307, D-7730 Villingen-Schwenningen(DE)**

(72) Erfinder: **Kaaden, Jürgen, Im Tannhörnle 10, D-7730 VS-Pfaffenweiler(DE)**
Erfinder: **Link, Hermann, Augenmoosstrasse 10, D-7730 VS-Obereschach(DE)**

## Beschreibung

Die Erfindung betrifft ein magnetisches Aufzeichnungsgerät zur Speicherung von Signalen auf einem in einer Kassette gelagerten bandförmigen Aufzeichnungsträger, der bei Inbetriebnahme des Aufzeichnungsgerätes von einer Vorrichtung herausziehbar und um eine rotierende Kopftrommel legbar und bei Außerbetriebnahme von der Vorrichtung in die Kassette rückführbar ist, sowie mit einer Einrichtung zur Zählung und Anzeige der transportierten Länge des bandförmigen Aufzeichnungsträgers und einer Speichereinrichtung zur Speicherung eines von der Zähleinrichtung ermittelten aktuellen Wertes sowie einer Vergleichseinrichtung zum Vergleich eines aktuellen Zählerstandes mit dem abgespeicherten Zählerstand.

In der EP-A1 0 002 946 wird ein magnetisches Aufzeichnungsgerät beschrieben, welches eine Einrichtung zur Zählung und Anzeige der transportierten Länge eines bandförmigen Aufzeichnungsträgers aufweist. Dieses Aufzeichnungsgerät besitzt zusätzlich noch eine Speichereinrichtung, die beim Herausnehmen des Aufzeichnungsträgers das aktuelle Zählergebnis der Zähleinrichtung übernimmt. Beim Einsetzen des Aufzeichnungsträgers wird eine Vergleichseinrichtung aktiviert, welche den von der Zähleinrichtung ermittelten aktuellen Wert mit dem zuvor gespeicherten Wert vergleicht, wobei eine Transporteinrichtung für den Aufzeichnungsträger so lange in Betrieb gesetzt wird, bis der aktuelle Wert der Zähleinrichtung mit dem abgespeicherten übereinstimmt.

Der genannten Anmeldung liegt die Aufgabe zugrunde, jeweils den bespielten Endstand einer Kassette festzuhalten, um bei späteren Aufnahmen an diesen Endstand weitere Aufnahmen anzuschließen. Dazu ist es aber erforderlich, daß entweder für jede Kassette ein derartiger Speicher im Aufzeichnungsgerät vorgesehen ist oder daß die Speichereinrichtung mit jeder Kassette untrennbar verbunden ist, damit die abgespeicherten Werte jeweils einer spezifischen Kassette zugeordnet sind.

Aufzeichnungsgeräte besitzen eine Kopftrommel, um die das Band bei Inbetriebsetzen des Gerätes geschlungen wird. Dazu dient eine von einem Motor angetriebene Fädelvorrichtung zum Ein- und Ausfädeln des Aufzeichnungsträgers.

Beim Einfädeln des Aufzeichnungsträgers, d.h. wenn das Aufzeichnungsgerät zur Wiedergabe oder Aufnahme eingeschaltet wird, zieht die Fädelvorrichtung den Aufzeichungsträger aus der Kassette und schlingt ihn um die Kopftrommel. Da der Wickelmotor bei diesem Vorgang bereits an den Aufwickelteller gekoppelt jedoch noch nicht bestromt ist, ist die Grundreibung dieses Tellers größer als die des Abwickeltellers, so daß der Aufzeichnungsträger von diesem abgezogen wird.

Bei Betätigen der Stop-Taste wird nach Abschalten des Bandvorschubs der Ausfädelvorgang eingeleitet. Ein Mechanismus zieht dabei den Aufzeichnungsträger aus dem Wirkungsbereich der Kopftrommel und führt ihn in die Kassette zurück. Dabei wird die Abwickelseite der Kassette in der Weise angetrieben, daß das Band auf diese aufgewickelt wird. Dies geschieht unter einer gewissen Bandspannung, so daß die bereits aufgezeichnete bzw. abgespielte Seite des Aufzeichnungsträgers von der Aufwickelseite abgezogen wird. Dies macht eine nicht zu vernachlässigenden Betrag aus. Bei Einschalten des Aufzeichnungsgerätes in der Betriebsart Wiedergabe wirkt sich dies nicht so störend aus als in der Aufzeichnungsbetriebsart. In der Wiedergabebetriebsart wird lediglich ein Stück wiederholt und die Überlappung stört nicht. In der Aufzeichnungsbetriebsart dagegen wird ein kleiner Abschnitt von der neuen Aufnahme überschrieben. um solches zu verhindern ist es bekannt, den Aufwickelteller mechanisch zu blockieren. Dies erfordert jedoch einigen mechanischen Aufwand z.B. in Form eines Hilfshebels, der vom Lademechanismus aus gesteuert wird.

Der Erfindung liegt die Aufgabe zugrunde, ohne großen zusätzlichen mechanischen Aufwand zu verhindern, daß eine Überlappung zwischen zwei Fädelvorgängen stattfindet. Diese Aufgabe wird durch die im Patentanspruch angegebene Erfindung gelöst. Sie besitzt den Vorteil, daß kein Mehraufwand entsteht, wenn das Aufzeichnungsgerät bereits mit einem elektronischen Bandzähler ausgerüstet ist.

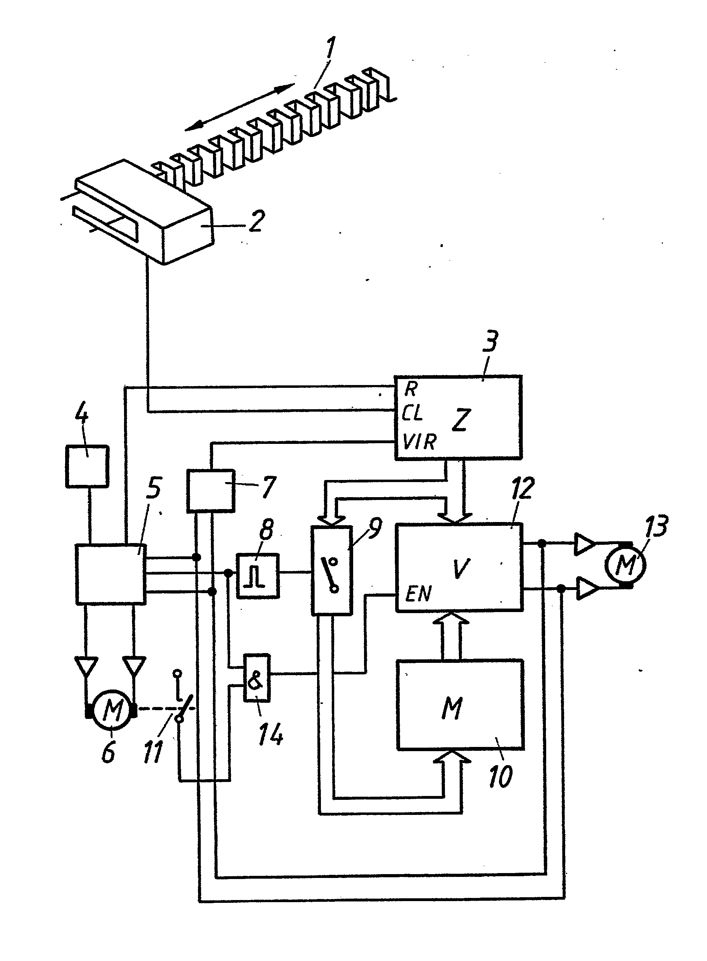

Nachstehend wird die Erfindung mit Hilfe der Zeichnung erläutert.

An einem Wickelteller, meist an dem der Aufwickelseite zugeordneten befindet sich ein Impulsgeber 1 in Form einer gezahnten Scheibe oder auch einer Folie, die am Rand abwechselnd lichtdurchlässig und lichtundurchlässig ist. Dieser Geber 1 arbeitet mit einem optischen Aufnehmer 2, der die Impulse erzeugt, die in einem Zähler 3 gezählt werden. Einer Umdrehung des Wickeltellers entspricht somit einer bestimmten Anzahl von Impulsen. Von einer Bedienungstastatur 4 werden die verschiedenen Komandos zur Steuerung des Aufzeichnungsgerätes abgegeben. Die Befehle gelangen an eine Ansteuerlogik 5, die z.B. beim Start den Fädelmotor 6 einschaltet, der je nach Befehl den Aufzeichnungsträger aus der Kassette heraus um die Kopftrommel legt oder von der Kopftrommel in die Kassette zurückbefördert. Die Ansteuerlogik 5 setzt z.B. den Zähler 3 auf einen bestimmten Anfangswert und gibt über die Richtungslogik 7 die Zählrichtung des Zählers 3 vor. Die Erfindung bezieht sich allein auf den Ausfädelvorgang, wenn das Aufzeichnungsgerät auf Stop-Funktion geschaltet wird und die Kassette zur Herausnahme vorbereitet wird. Durch den Befehl "Ausfädeln", d.h. wenn dieser Vorgang beginnt, wird ein kurzer in einer Stufe 8 erzeugter Impuls an eine Schaltstufe 9 gegeben, die die im Zähler 3 stehenden augenblicklichen Daten an einen Speicher 10 schaltet, der den aktuellen Zählerstand übernimmt. Von da ab findet der Ausfädelvorgang statt. Während dieses Vorgangs ist der Zähler 3 von der Richtungslogik 7 auf Rückwärtszählen geschaltet, so daß der Zähler 3 um den Betrag rückgesetzt wird, der der rückläufigen Drehung des Aufwickeltellers entspricht. Bei Ende des Ausfädelvorgangs wird ein Kontakt 11 geschlossen, der in Koinzidenz 14 mit dem Ausfädelsignal eine Vergleichsstufe 12 aktiviert. In diesem Moment werden die zuvor gespeicherten Daten mit dem aktuellen Zählerstand verglichen. Die Vergleichsstufe 12 liefert an den Motor für den Bandvorschub 13 solange ein Signal, bis der aktuelle Zählerstand mit dem gespeicherten übereinstimmt. Das ist der Wert, der im Zähler 3 stand bevor der Aufzeichnungsträger ausgefädelt wurde.

## Patentansprüche

Magnetisches Aufzeichnungsgerät zur Speicherung von Signalen auf einem in einer Kassette gelagerten bandförmigen Aufzeichnungsträger, der bei Inbetriebnahme des Aufzeichnungsgerätes von einer Vorrichtung herausziehbar und um eine rotierende Kopftrommel legbar und bei Außerbetriebnahme von der Vorrichtung in die Kassette rückführbar ist, sowie mit einer der Aufwickelseite zugeordneten Einrichtung (3) zur Zählung und Anzeige der transportierten Länge des bandförmigen Aufzeichnungsträgers und einer Speichereinrichtung (10) zur Abspeicherung des beim Einleiten der Rückführung des Aufzeichnungsträgers in die Kassette von der Einrichtung (3) ermittelten aktuellen Zählerstandes sowie mit einer Vergleichseinrichtung (12) zum Vergleich eines aktuellen Zählerstandes mit dem abgespeicherten Zählerstand, wobei bei Übereinstimmung des Vergleiches ein Stopsignal für den Wickelmotor (13) abgeleitet wird, **dadurch gekennzeichnet**, daß nach Beendigung der Rückführung des Aufzeichnungsträgers die Vergleichseinrichtung (12) aktiv geschaltet wird, die den mit dem Aufwickelteller gekoppelten Wickelmotor (13) solange in Betrieb setzt, bis der aktuelle Zählerstand der Zähleinrichtung (3) mit dem abgespeicherten Wert übereinstimmt.

## Claims

Magnetic recorder for storing signals on a band-shaped recording medium supported in a cassette, said band-shaped recording medium being on start-up of the recorder extractable and wrappable round a rotating head drum by a device and on shut-down reinsertable into the cassette by the device, and with a unit (3) associated with the take-up side for counting and indicating the transported length of the band-shaped recording medium and a storage device (10) for storing the current counter reading determined by the unit (30) on initiation of the reinsertion of the recording medium into the cassette and with a comparison device (12) for comparing a current counter reading with the stored counter reading, where on agreement of the comparison a stop signal for the wind motor (13) is derived, characterised in that on completion of the reinsertion of the recording medium the comparison device (12) is activated and starts up the wind motor (13) coupled to the take-up spindle until such time as the current counter reading of the counter (3) agrees with the stored value.

## Revendications

Enregistreur magnétique pour le stockage de signaux sur un support d'enregistrement en forme de bande loge dans une cassette et qui est susceptible d'être extrait par un dispositif au moment de la mise en marche de l'appareil enregistreur et placé autour d'une roue porte-têtes mobile en rotation et pouvant être réintroduit dans la cassette par le dispositif lors de l'arrêt, et comprenant un systeme (3) associé au côté enroulement pour le comptage et l'affichage de la longueur transportée du support d'enregistrement en forme de bande et une mémoire (10) pour la mise en mémoire de la position effective du compteur constatée par le système (3) lorsque commence la réintroduction du support d'enregistrement dans la cassette ainsi qu'un système comparateur (12) déstiné à comparer une position instantanée du compteur avec la position mise en mémoire, un signal d'arrêt étant dérivé pour le moteur d'enroulement (13) en cas de concordance de la comparaison, caractérisé en ce qu'à la fin du retour du support d'enregistrement le système comparateur (12) est mis à l'état actif et fait fonctionner le moteur d'enroulement (13) accouplé au plateau d'enroulement jusqu'au moment la position effective du système de comptage (3) coïncide avec la valeur mise en mémoire.